# EUROPEAN PATENT SPECIFICATION

(11) **EP 3 598 888 B1**
(45) Date of publication and mention of the grant of the patent: **01.06.2022**
(21) Application number: 19187805.7
(22) Date of filing: 23.07.2019
(51) Int. Cl.: A01D 43/063

(54) **LAWNMOWER BAG WITH GRASS CONVEYOR**
GRASFANGSACK MIT GRASFÖRDERER
PANIER DE TONDEUSE AVEC CONVOYEUR DE GAZON

(30) Priority: 27.07.2018 IT 201800007555
(43) Date of publication of application: 29.01.2020
(73) Proprietor: Stiga S.p.A. in breve anche St. S.p.A., 31033 Castelfranco Veneto (TV) (IT)
(72) Inventor: GATTO, Carla, 35010 TREBASELEGHE (PD) (IT); BACCHIN, Gian Luca, 31033 CASTELFRANCO VENETO (TV) (IT)
(74) Representative: Mittler, Andrea

(56) References cited:
- EP-A1- 1 252 811
- AU-B2- 421 582
- FR-A1- 2 557 419
- US-A- 5 076 045
- US-A- 5 517 811

## Description

The present invention relates to a lawnmower bag with a grass conveyor.

There is an established use of rigid or semi-rigid bags for collecting the cut grass by the lawnmower.

The bag is separably associated with the back part of the lawnmower so that the grass cut by the blade flows into the bag.

Said back part has a through opening able to be separably coupled with the inlet of the bag which normally has a rigid edge with coupling means.

The bag filled with grass is separated from the lawnmower and discharged where it is convenient.

In the uncoupling step there is the problem of not dropping, onto the ground, part of the grass that remains in the coupling zone of the bag with the lawnmower.

Said problem is accentuated by the fact that the back coupling part of the lawnmower is low and the bag is coupled with the inlet, which is tilted downwards.

The prior art proposes a solution which has partly resolved the problem, in which an outward-protruding conveyor is mounted on the contour of the bag inlet.

Said conveyor is able to be inserted into a channel of the opening on the back part of the lawnmower, substantially by resting on the base of the channel.

EP-1252811 shows a conveyor of this type, associated with a lower edge of the bag inlet. Said conveyor has a first portion inclined towards the bag and a second portion inclined towards the opening of the lawnmower. It is also worth noting a plane tilted inside the bag so as to cause the grass to come out of the bag.

Disadvantageously, it is sufficient for the bag to be only partially filled to make the conveyor useless: this indeed is connected to the bag at the lower plane of the bag.

If the bag is full, the disengagement inevitably induces the cut grass to fall.

Moreover, the cut grass may return towards the lawnmower during the cutting.

The conveyor described in EP-1252811 substantially helps the coupling of the bag to the lawnmower, thus only slightly limiting the problem of the grass falling during the uncoupling step.

US-5517811 describes an assembly comprising a lawnmower bag, a grill and a conveyor of the cut grass. Said conveyor is rotatably associated with the grill at an opening. The grill is fastened to the frame of the lawnmower by mounting arms. The bag comprises an inlet delimited by a rectangular frame which supports two protruding hooks able to be coupled with a horizontal bar which is integral with said grill.

During the cutting operation, the conveyor is rotatable between a first position in which it directs the cut grass into the bag, and a second position in which it directs the cut grass directly onto the ground, without entering the bag which is uncoupled from the lawnmower.

The conveyor is not rotatably hooked to the rectangular frame of the inlet of the bag, nor does it have hooking means which hold it stationary in at least one of said two positions.

The change in the position of the conveyor occurs following the interaction of the lower portion of the frame of the bag with an actuation portion of the conveyor rotatably associated with the grill, not with the frame of the bag.

Disadvantageously, when the bag is removed, the inlet of the bag is completely free and the grass collected in the bag for the most part falls onto the grill or immediately under; some cut grass also returns into the outlet channel of the lawnmower.

It is the object of the present invention to make a lawnmower bag provided with a conveyor which limits the loss of grass in uncoupling step with the lawnmower and which helps the extraction of the grass from the outlet channel of the lawnmower.

It is a further object of the present invention that the conveyor does not obstruct the inlet of the grass into the bag during cutting.

Not lastly, it is an object of the present invention that the conveyor is easily associable with the bag and fits to the coupling with lawnmowers on the market.

It is a further object again to facilitate emptying the bag in the presence of the conveyor itself.

According to the invention, said and further objects are achieved with a bag suitable for separably associating with a lawnmower, comprising an inlet provided with an edge which has a lower edge and two lateral edges, and a conveyor of cut grass provided with a lower edge rotatably associated with the lower edge of the bag,
characterized in that the conveyor comprises reversible hooking means to at least one lateral edge of the bag so that the conveyor is able to assume a first configuration in which it is integral with the edge of the inlet, and a second configuration in which it is free to rotate about the lower edge of the edge of the inlet.

The conveyor advantageously allows improving the conveying of the grass into the bag in the cutting step of the lawnmower, and at the same time it does not obstruct the inlet both in the cutting and discharging step.

During the step of uncoupling the bag from the lawnmower, the conveyor remains hooked to the lateral edge of the bag.

Once uncoupling has occurred and the bag has been brought to where it is to be emptied, the conveyor is easily unhooked from the lateral edge of the bag: the conveyor rotates downwards about the lower edge of the bag; the inlet of the bag is completely open and ready for discharging.

These and other features of the present invention will become more apparent from the following detailed description of a practical embodiment thereof, shown by way of non-limiting example in the accompanying drawings, in which:
figure 1 shows a perspective view of a bag, with a conveyor in a first configuration;
figure 2 shows a perspective view of the bag, with the conveyor in a second configuration;
figure 3 shows a perspective view of the bag, with the conveyor in a first configuration and with the portion comprised in the circle A on enlarged scale;
figure 4 shows a side view of the bag associated with a lawnmower;
figure 5 shows a perspective view of a back part of the lawnmower.

A bag 1 made of rigid or semi-rigid material suitable for separably associating with a lawnmower 2 has an inlet 3 provided with an edge 4 comprising a lower edge 5 and two lateral edges 6.

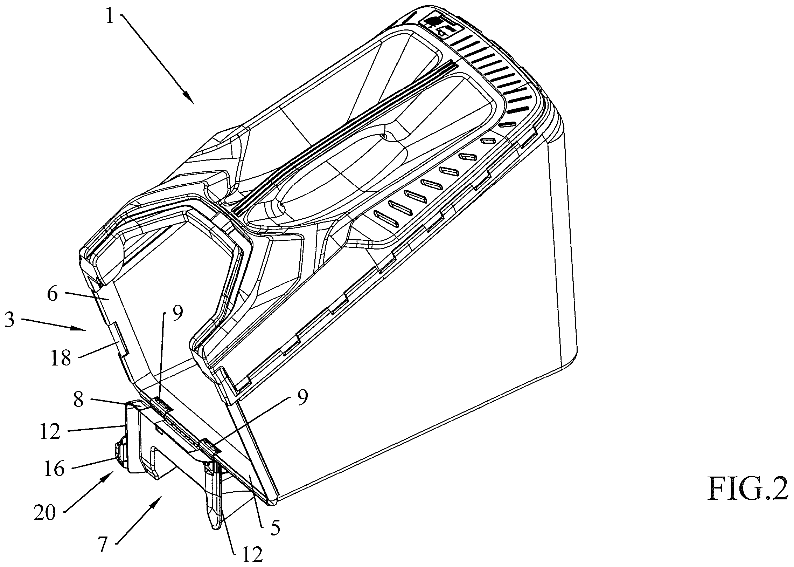

The bag 1 further comprises a conveyor 7 provided with a lower edge 8 rotatably associated with the lower edge 5 of the edge 4 of the inlet 3 by hinges 9 (figure 2).

The conveyor 7 comprises a plane 10 in which the cut grass is able to slide.

Said plane 10 is laterally contained between two walls 11 protruding from lateral edges 12 of the conveyor 7.

Said lateral edges 12 terminate in said lower edge 8, thus delimiting a wall 13 able to support the plane 10 and which comprises ribs 14.

The plane 10 protrudes at the upper end of wall 13.

The conveyor 7 further comprises reversible hooking means 20 at one of the lateral edges 12 (figures 2 to 3).

Said reversible hooking means 20 comprise a curved element 16 able to elastically deform and which identifies a compartment 17 able to be separably coupled with a rounded portion 18 of the lateral edge 6 of the inlet 3.

The conveyor 7 is free to rotate about the lower edge 5 only when the reversible hooking means 20 are not engaged with the lateral edge 6.

When the conveyor 7 is hooked to said lateral edge 6, the wall 13 obstructs a part of the inlet 3 of the bag 1; the lateral edge 12 in which the reversible hooking means 20 are provided is flush with the lateral edge 6 of the edge 4 comprising said rounded portion 18.

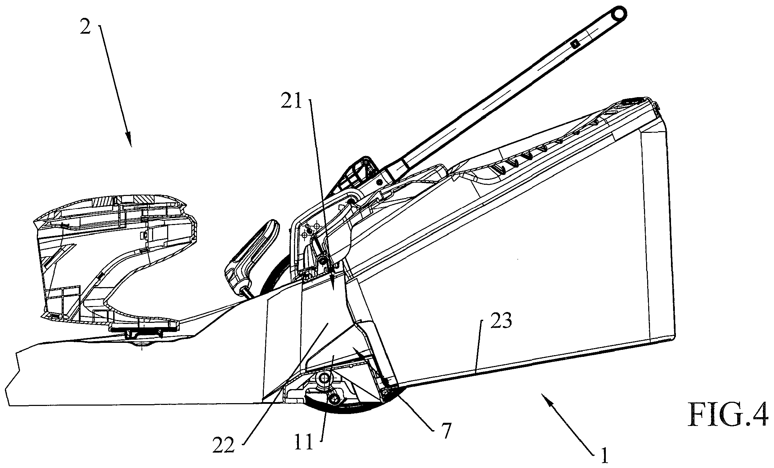

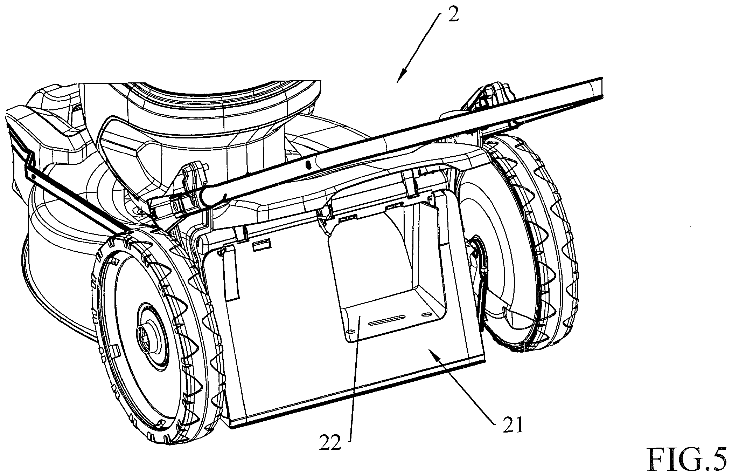

Operatively, the coupling of the bag 1, still empty, with a back part 21 of the lawnmower 2 (figures 4, 5) occurs by introducing the protruding portion of the conveyor 7, i.e. the plane 10, into a channel 22 of said back part 21.

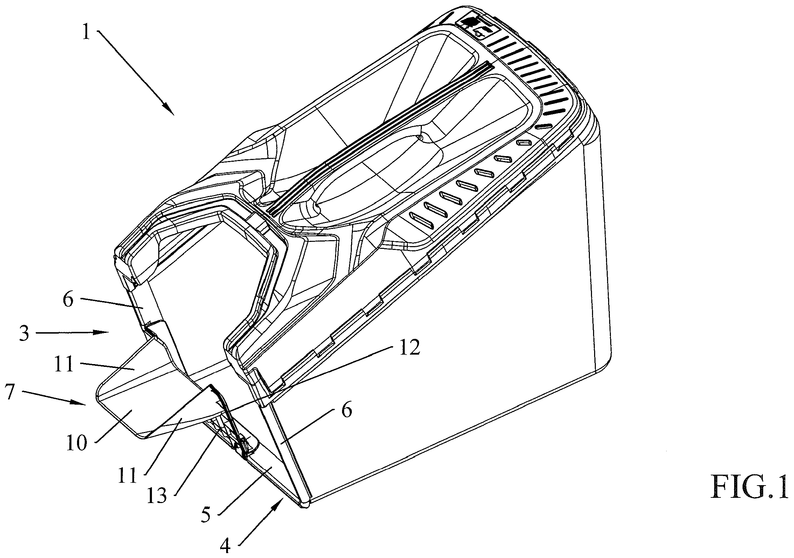

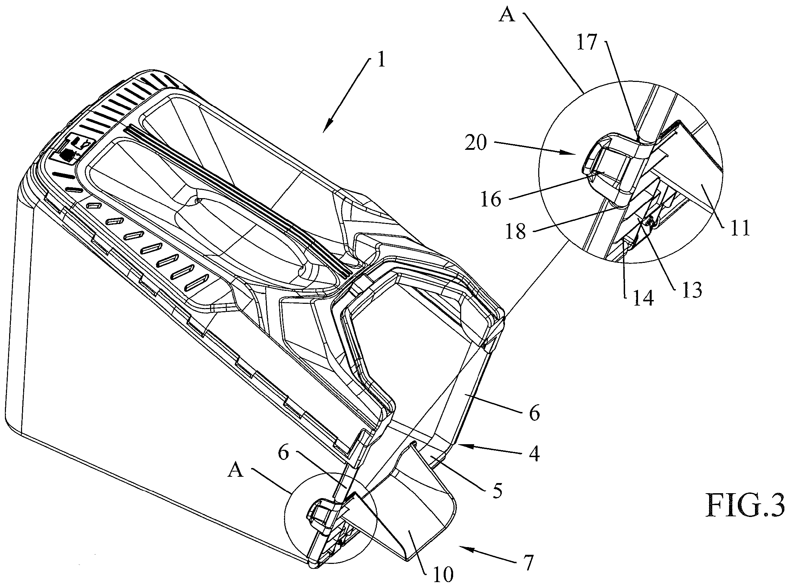

The conveyor 7 is hooked to the lateral edge 6 of the edge 4 of the bag 1 (figures 1 and 3), i.e. it is integral with said edge 4.

Once the coupling is complete, the lawnmower 2 cuts the grass which accumulates in the bag 1 by sliding over the plane 10 of said conveyor 7.

The wall 13 advantageously places the plane 10 at a greater height than a bottom 23 of the bag 1 so that the cut grass accumulates without the risk of obstructing the plane 10 which could cause a return of the cut grass into the cutting zone of the lawnmower 2.

During the step of uncoupling the bag 1 from lawnmower 2, the conveyor 7 remains hooked to the lateral edge 6 of the bag 1: the wall 13 of the conveyor 7 advantageously performs a containing function for the cut grass in the bag 1.

Moreover, any grass residuals on the plane 10 slide into the bag 1.

Once uncoupling has occurred and the bag 1 has been brought to where it is to be emptied, the conveyor 7 is unhooked from the lateral edge 6 of the bag 1 by actuating the hooking means 20: the conveyor 7 rotates downwards about the lower edge 5 of the bag 1 (figure 2); the inlet 3 of the bag 1 is completely open and ready for discharging. Possible grass residuals on the plane 10 directly fall.

The conveyor 7 advantageously allows conveying the grass into the bag 1 to be improved in the cutting step of the lawnmower 2, and at the same time it does not obstruct the inlet 3 both in the cutting and discharging step.

Indeed, the wall 13 is arranged under the channel 22 of the back part 21 of the lawnmower 2 in the cutting step and therefore does not obstruct the flow of grass into the bag 1.

Said wall 13 also causes a raised position of the plane 10 with respect to the bottom 23 of the bag 1, therefore increasing the filling capacity of the bag 1 without risks of grass overflow.

The reversible hooking means 20 are manually maneuverable, of snap type in the embodiment shown in the drawings.

The reversible hooking means 20 may be of another type, not necessarily snap type (for example of screw, spring type or other retaining system), so long as they allow the conveyor 7 to assume a hooked position to the bag 1, i.e. fixed position with respect to the bag 1, and a released position from the bag 1 in which the conveyor 7 is free to rotate about the lower edge 5 of the edge 4 of the bag 1 so as to completely free the inlet 3 of the bag 1.

The wall 13 may extend from one lateral edge 6 to the other lateral edge of the edge 4 of the bag 1 as needed: it increases the weight of the conveyor 7 but the containing capacity of the bag 1 further improves. Here, the conveyor 7 may have reversible hooking means 20 on both the lateral edges 12.

## Claims

1. Bag (1) suitable for separably associating with a lawnmower (2), comprising an inlet (3) provided with an edge (4) which has a lower edge (5) and two lateral edges (6), and a conveyor (7) of cut grass provided with a lower edge (8) rotatably associated with the lower edge (5) of the bag (1),
**characterized in that** the conveyor (7) comprises reversible hooking means (20) to at least one lateral edge (6) of the bag (1), so that the conveyor (7) is able to assume a first configuration in which it is integral with the edge (4) of the inlet (3), and a second configuration in which it is free to rotate about the lower edge (5) of the edge (4) of the inlet (3).

2. Bag (1) according to claim 1, **characterized in that** the conveyor (7) comprises a plane (10) in which the cut grass is able to slide, and a wall (13) able to support said plane (10) so that the plane (10) is at an upper height with respect to a bottom (23) of the bag (1) when it is coupled to the lawnmower (2), said plane (10) projecting at the upper end of the wall (13).

3. Bag (1) according to claim 2, **characterized in that** the plane (10) is laterally contained between two walls (11) protruding from lateral edges (12) of the conveyor (7), said lateral edges (12) terminate in said lower edge (8) delimiting the wall (13).

4. Bag (1) according to any one of the previous claims, **characterized in that** the reversible hooking means (20) are at least one of the lateral edges (12) of the conveyor (7).

5. Bag (1) according to any one of the previous claims, **characterized in that** said reversible hooking means (20) are of the snap type.

6. Bag (1) according to any one of the previous claims, **characterized in that** said reversible hooking means (20) comprise a curved element (16) able to elastically deform and which identifies a compartment (17) able to separably couple with a rounded portion (18) of the lateral edge (6) of the edge (4) of the inlet (3).

7. Bag (1) according to any one of claims 2-6, **characterized in that** the wall (13) extends from a lateral edge (6) to the other of the edge (4) of the inlet (3).

## Patentansprüche

1. Sack (1), der zum losbaren Verbinden mit einem Rasenmaher (2) geeignet ist, mit einen Einlass (3), der mit einem Rand (4) versehen ist, der einen unteren Rand (5) und zwei seitliche Rander (6) aufweist, und mit einer Fordereinrichtung (7) fur Grasschnitt, die mit einem unteren Rand (8) versehen ist, der mit dem unteren Rand (5) des Sacks (1) rotationsbeweglich verbunden ist,
**dadurch gekennzeichnet, dass** die Fordereinrichtung (7) reversible Hakeneinrichtungen (20) an mindestens einem seitlichen Rand (6) des Sacks (1) aufweist, so dass die Fordereinrichtung (7) eine erste Konfiguration annehmen kann, in der sie mit dem Rand (4) des Einlasses (3) integral verbunden ist, und eine zweite Konfiguration annehmen kann, in der sie um den unteren Rand (5) des Rands (4) des Einlasses (3) frei drehbar ist.

2. Sack (1) nach Anspruch 1,
**dadurch gekennzeichnet, dass** die Fordereinrichtung (7) eine Ebene (10) aufweist, in der der Grasschnitt gleiten kann, sowie eine Wand (13) aufweist, die die Ebene (10) derart tragen kann, dass sich die Ebene (10) auf einer oberen Hohe in Bezug auf einen Boden (23) des Sacks (1) befindet, wenn sie mit dem Rasenmaher (2) gekoppelt ist, wobei die Ebene (10) am oberen Ende der Wand (13) vorsteht.

3. Sack (1) nach Anspruch 2,
**dadurch gekennzeichnet, dass** die Ebene (10) seitlich zwischen zwei Wanden (11) enthalten ist, die von seitlichen Randern (12) der Fordereinrichtung (7) vorstehen, wobei die seitlichen Rander (12) in dem unteren Rand (8) enden, der die Wand (13) begrenzt.

4. Sack (1) nach einem der vorhergehenden Anspruche,
**dadurch gekennzeichnet, dass** die reversiblen Hakeneinrichtungen (20) mindestens einen der seitlichen Rander (12) der Fordereinrichtung (7) bilden.

5. Sack (1) nach einem der vorangehenden Anspruche,
**dadurch gekennzeichnet, dass** die reversiblen Hakeneinrichtungen (20) vom Einschnapp-Typ sind.

6. Sack (1) nach einem der vorangehenden Anspruche,
**dadurch gekennzeichnet, dass** die reversiblen Hakeneinrichtungen (20) ein gekrummtes Element (16) aufweisen, das sich elastisch verformen kann und ein Fach (17) ausweist, das mit einem abgerundeten Bereich (18) des seitlichen Rands (6) des Rands (4) des Einlasses (3) losbar gekoppelt werden kann.

7. Sack (1) nach einem der Anspruche 2 bis 6
**dadurch gekennzeichnet, dass** sich die Wand (13) von einem seitlichen Rand (6) zu dem anderen seitlichen Rand von dem Rand (4) des Einlasses (3) erstreckt.

## Revendications

1. Sac (1) approprié pour s'associer de manière séparable à une tondeuse à gazon (2), comprenant une entrée (3) munie d'un bord (4) qui a un bord inférieur (5) et deux bords latéraux (6), et un convoyeur (7) d'herbe coupée muni d'un bord inférieur (8) associé à rotation au bord inférieur (5) du sac (1),
**caractérisé en ce que** le convoyeur (7) comprend des moyens d'accrochage réversible (20) à au moins un bord latéral (6) du sac (1), de sorte que le convoyeur (7) est capable de revêtir une première configuration dans laquelle il est solidaire du bord (4) de l'entrée (3), et une seconde configuration dans laquelle il est libre de tourner autour du bord inférieur (5) du bord (4) de l'entrée (3).

2. Sac (1) selon la revendication 1, **caractérisé en ce que** le convoyeur (7) comprend un plan (10) dans lequel l'herbe coupée est capable de glisser, et une paroi (13) capable de supporter ledit plan (10) de sorte que le plan (10) est à une hauteur supérieure par rapport à un fond (23) du sac (1) lorsqu'il est couplé à la tondeuse à gazon (2), ledit plan (10) dépassant à l'extrémité supérieure de la paroi (13).

3. Sac (1) selon la revendication 2, **caractérisé en ce que** le plan (10) est contenu latéralement entre deux parois (11) faisant saillie de bords latéraux (12) du convoyeur (7), lesdits bords latéraux (12) se terminent dans ledit bord inférieur (8) délimitant la paroi (13).

4. Sac (1) selon l'une quelconque des revendications précédentes, **caractérisé en ce que** les moyens d'accrochage réversible (20) sont au moins l'un des bords latéraux (12) du convoyeur (7).

5. Sac (1) selon l'une quelconque des revendications précédentes, **caractérisé en ce que** lesdits moyens d'accrochage réversible (20) sont du type à enclenchement.

6. Sac (1) selon l'une quelconque des revendications précédentes, **caractérisé en ce que** lesdits moyens d'accrochage réversible (20) comprennent un élément incurvé (16) capable de se déformer élastiquement et qui identifie un compartiment (17) capable de couplage séparable avec une partie arrondie (18) du bord latéral (6) du bord (4) de l'entrée (3).

7. Sac (1) selon l'une quelconque des revendications 2 à 6, **caractérisé en ce que** la paroi (13) s'étend d'un bord latéral (6) à l'autre du bord (4) de l'entrée (3).
